(19) Europäisches Patentamt / European Patent Office / Office européen des brevets

(11) **EP 1 746 813 A1**

(12) **EUROPEAN PATENT APPLICATION**

(43) Date of publication:
**24.01.2007  Bulletin 2007/04**

(51) Int Cl.:
**H04M 1/725** *(2006.01)*

(21) Application number: **06015164.4**

(22) Date of filing: **20.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.07.2005  KR 20050066142**

(71) Applicant: **Neomtel Co., Ltd.**
**Gangnam-gu, Seoul 135-080 (KR)**

(72) Inventor: **Yoon, Sung-kyoon**
**185 Yatap-dong**
**Seongnam-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Method and apparatus for playing content on background image of mobile terminal**

(57)    An apparatus for playing content is provided, including: a message receiving unit receiving a short message; a message interpreting unit extracting position information of multimedia content contained in the short message; a content receiving unit accessing a content server through the position information to download the content; an alpha blender blending the content with a background image; and a display unit receiving and playing the content blended with the background image.

FIG.1

**Description**

BACKGROUND OF THE INVENTION

This application claims the priority of Korean Patent Application No. 2005-066142, filed on July 21, 2005, in the Korean Intellectual Property Office, the disclosure of which is incorporated herein in its entirety by reference.

1. Field of the Invention

The present invention relates to a method and apparatus for playing multimedia content downloaded or generated by users on a background image of a mobile terminal.

2. Description of Related Art

In general, a mobile communication terminal, such as mobile phone or PDA (personal digital assistant), displays a variety of content, such as flash image or VIS content, as a background image. For instance, users can set multimedia content downloaded from a content server or pictures or moving images taken with their cameras as background images of their mobile communication terminals.

However, there is a problem in that when the multimedia content is displayed on the background image or is set as the background image, an existing background image needs to be deleted or temporarily stored and the multimedia content needs to be reset as a new background image.

SUMMARY OF THE INVENTION

The present invention provides a method and apparatus for playing a background image of a mobile terminal blended with multimedia content downloaded or generated by a user.

According to an aspect of the present invention, there is provided an apparatus for playing content, including: a message receiving unit receiving a short message; a message interpreting unit extracting position information of multimedia content contained in the short message; a content receiving unit accessing a content server through the position information to download the content; an alpha blender blending the content with a background image; and a display unit receiving and playing the content blended with the background image.

The message receiving unit may receive and transmit an SMS message or a Common SMS message to the message interpreting unit with no interaction with a user.

The message interpreting unit may receive the position information of the multimedia content in URL (Uniform Resource Locator) form and extract the position information from the short message.

The message interpreting unit may extract from the short message at least one of IP address of a multimedia content server and ID of content to be downloaded.

According to another aspect of the present invention, there is provided an apparatus for playing content, including: a determination unit accessing a content server according to predetermined time intervals or user's setup to determine whether or not content is updated; a content receiving unit downloading content when the content is updated; an alpha blender blending the content with a background image; and a display unit receiving and playing the content blended with the background image.

According to another aspect of the present invention, there is provided a method of playing content, including: receiving position information of multimedia content including animation, news and current stock prices that are produced by content providers and are contained in a short message; accessing a server storing the multimedia content through the position information contained in the short message and downloading the multimedia content; and displaying the content blended with a background image.

The operation of accessing a server may extract the position information of multimedia content contained in the short message in URL form, and access the server through the extracted position information to download the multimedia content.

The operation of accessing a server may receive at least one of IP address of a server and ID of content that are contained in the short message and download the content.

According to another aspect of the present invention, there is provided a method of playing content, including: accessing a content server according to predetermined time intervals or user's setup to determine whether or not content is updated; downloading content when the content is updated; and displaying the content blended with a background image.

BRIEF DESCRIPTION OF THE DRAWINGS

The above and other features and advantages of the present invention will become more apparent by describing in detail exemplary embodiments thereof with reference to the attached drawings in which:

FIG. 1 is a view for explaining a method of playing a background image blended with content downloaded from a server, according to an embodiment of the present invention;

FIG. 2 is a process and system for receiving position information of content in an SMS form, accessing a content server to download the content, and displaying the content blended with a background image;

FIG. 3 is a process and system for receiving address of a content server and ID of content in an SMS form, accessing the content server to download the content, and displaying the content blended with a background image;

FIG. 4 is a process and system for regularly checking whether or not content stored in a content server is updated, downloading updated content, and displaying the content blended with a background image;

FIGS. 5A to 5D are views of a process of playing content blended with a background image;

FIG. 6 is a block diagram of a content player according to an embodiment of the present invention; and

FIG. 7 is a block diagram of a content player according to another embodiment of the present invention.

DETAILED DESCRIPTION OF THE INVENTION

Exemplary embodiments in accordance with the present invention will now be described in detail with reference to the accompanying drawings.

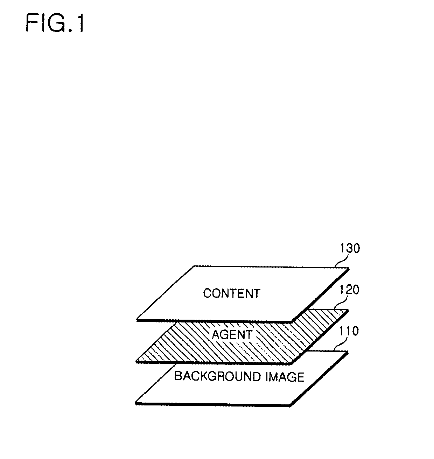

FIG. 1 is a view for explaining a method of playing a background image blended with content downloaded from a server, according to an embodiment of the present invention.

When a content 130 downloaded from a server or generated by a user is read on a background image 110, an agent 120 blends objects constituting the content 130 with the background image 110 and plays the blended image. If the content 130 has a transparency value, the content 130 is displayed together with the background image 110. Unless it has a transparency value, the content 130 is displayed, covering the background image 110.

The transparency value may be newly applied or changed so that the background image 110 can be viewed under the content 130.

When a transparent content 130 is blended with the background image 110 and displayed to a user, color values of pixels constituting the blended image are calculated according to Equation 1. Equation 1 indicates R, G, and B values of each of the pixels constituting the blended image. The color value is calculated with respect to each of R, G, and B.

[Equation 1]

$$\text{Color value } (R, G, B) = [(255 - \text{transparency value})/255] * \text{color value of background image} + \text{color value of content}$$

In Equation 1, the term 'transparency value' is also referred to as an alpha value. A 'transparency value' of 0 implies a fully transparent state, and a 'transparency value' of 255 implies a fully non-transparent state. The agent 120 reads the content 130, blends the content with the background image 110 based on a predetermined transparency value of the content, and plays the blended image.

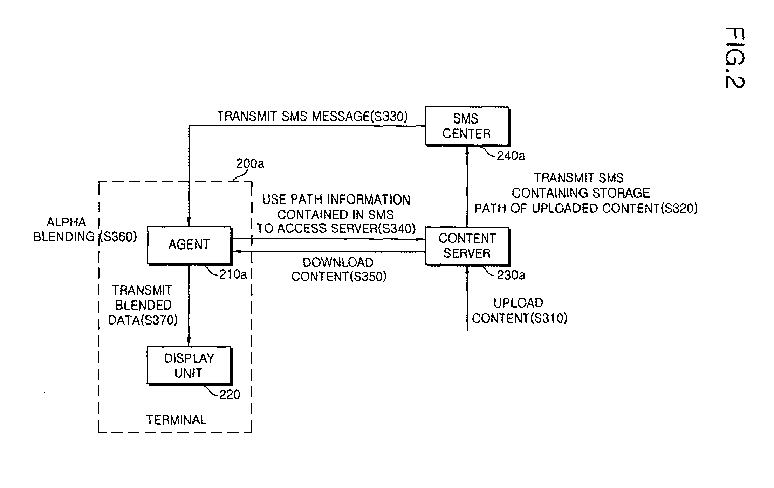

FIG. 2 is a process and system for receiving position information of content in an SMS form, accessing a content server to download the content, and displaying the content blended with a background image.

A content server 230a stores information, such as animation, news, and current stock prices, produced by a content provider (operation S310). The information may be uploaded by the content provider periodically or non-periodically. The content server 230a informs an SMS center 240a, which is located on a mobile communication network, of newly uploaded content and storage position of content. The storage position of content may be URL (Uniform Resource Locator) of content containing domain name of the server 230a (operation S320). The SMS center 240a transmits it to a terminal 200a in an SMS message form (operation S330). An agent 210a included in the terminal accesses the content server 230a through the URL information of the content contained in the SMS message (operation S340). The SMS message may be a typical SMS message or a Common SMS message. The Common SMS message is received by the agent 210a even though a user does not check whether or not a message has been received. The Common SMS message is a message internally used without notifying a user that the message has been received.

The content accessed through URL is downloaded (operation S350). The agent 210a alpha-blends the content with the background image (operation S360) and transmits it to a display unit 220 (operation S370). The alpha-blending is described above in detail with reference to FIG. 1.

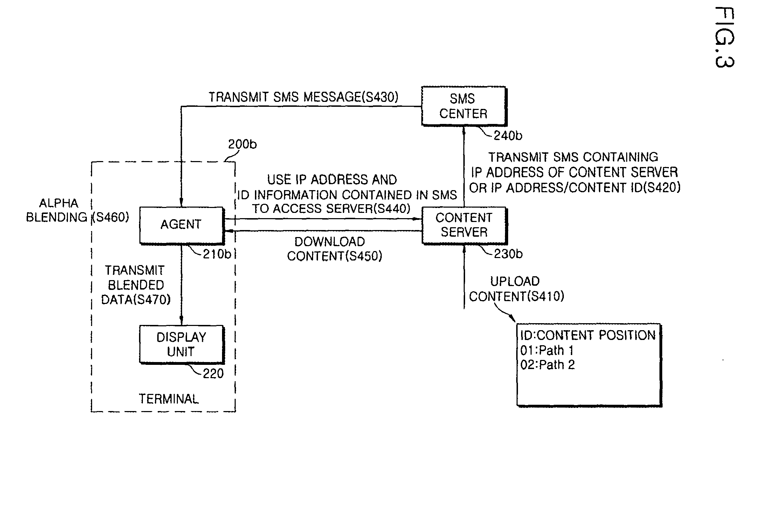

FIG. 3 is a process and system for receiving address of a content server and ID of content in an SMS form, accessing the content server to download the content, and displaying the content blended with a background image.

It can be seen from FIG. 3 that the content uploaded in the operation S410 is configured in a table form indicating content ID and content storage path. Thus, the message transmitted from the content server 230b to the SMS center 240b may include only IP address of the content server 230b or both IP address and content ID of the content server 230b (operation S420). The agent 210b receives the SMS message (operation S430), and uses the IP address and content ID contained in the SMS message to access the content server 230b (operation S440). The agent 210b downloads content using content ID of the content required by the user (operation S450), and conducts alpha-blending (operation S460). The alpha-blended data is transmitted to the display unit 220 (operation S470).

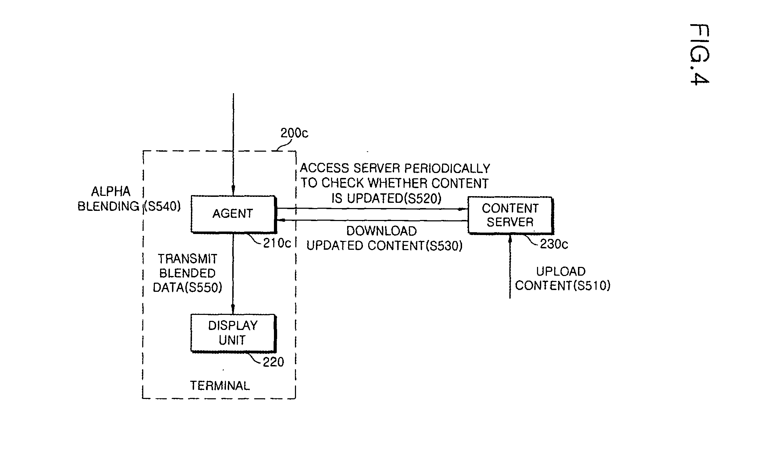

FIG. 4 is a process and system for regularly checking whether or not content stored in a content server is updated, downloading updated content, and displaying the content blended with a background image.

Operation of uploading content (operation S510) is the same as the operation described in FIG. 3 or 4. The content server 230c stores the uploaded content. The agent 210c accesses the content server 230c at predetermined times or at times determined by users and checks whether or not the content has been updated (operation S520). If the content has been updated, the agent 210c downloads the content (operation S530), conducts alpha-blending with the background image (operation S540), and transmits the content blended with the background image to the display unit 220 (operation S550).

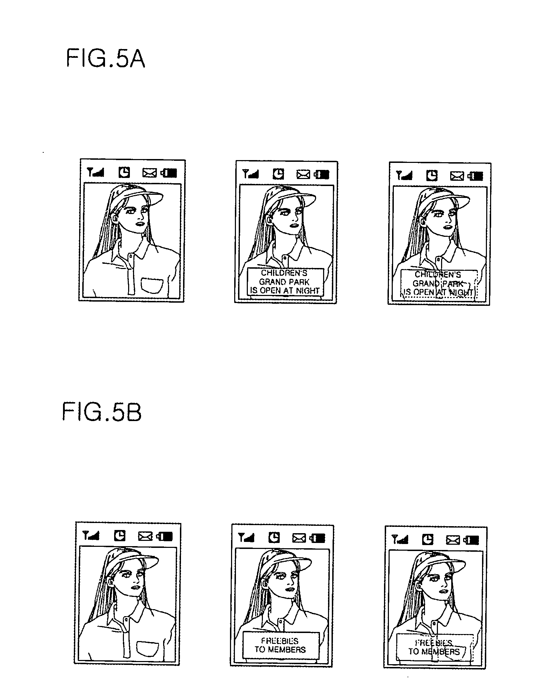

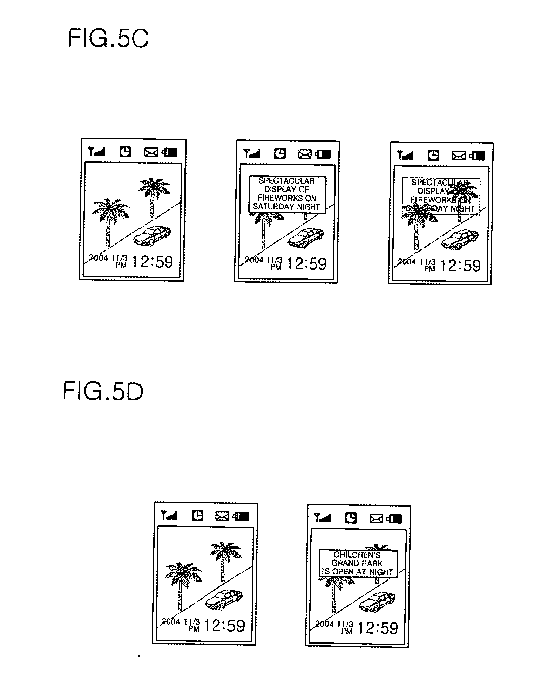

FIGS. 5A to 5D are views of a process of playing content blended with a background image.

It can be seen from FIGS. 5A to 5D that the background image does not disappear and the content is played on the background image. When content with a predetermined transparency value is played, a background image is seen through objects constituting the content.

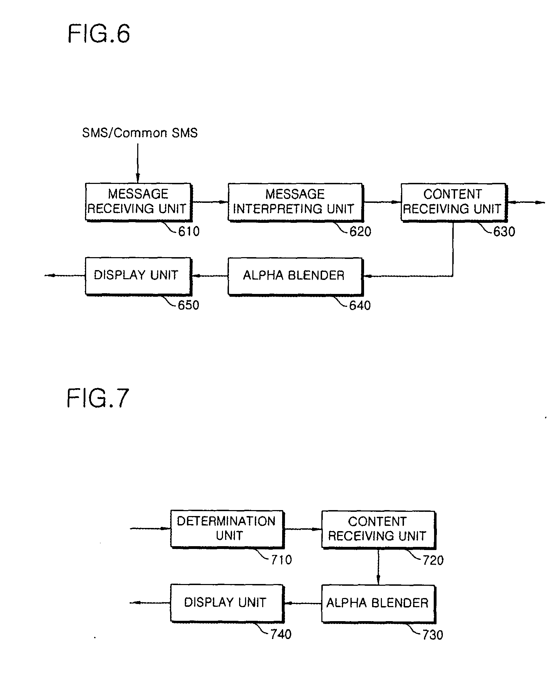

FIG. 6 is a block diagram of a content player according to an embodiment of the present invention.

The content player includes a message receiving unit 610, a message interpreting unit 620, a content receiving unit 630, an alpha blender 640, and a display unit 650. The agent 210a, 210b, or 210c shown in FIGS. 2 to 4 includes the message receiving unit 610, the message interpreting unit 620, the content receiving unit 630, and the alpha blender 640.

The message receiving unit 610 receives URL indicating content storage position, IP address of the content server, or content ID in SMS message or Common SMS message form. The message interpreting unit 620 extracts the URL, IP address, or content ID from the SMS message, and transmits it to the content receiving unit 630. The content receiving unit 630 accesses the content server using the URL or IP address, and downloads content. If the content ID is received through the SMS message, the content can be more easily downloaded.

The alpha blender 640 alpha-blends the content with the background image and transmits it to the display unit 650. The alpha-blending is described above in detail with reference to FIG. 1.

FIG. 7 is a block diagram of a content player according to another embodiment of the present invention.

In a case when the agent 210c checks whether or not content stored in the content server 230c has been updated, without passing through the SMS center as shown in FIG. 4, the content player needs not to include the message receiving unit and the message interpreting unit.

Thus, the content player may include a determination unit 710, a content receiving unit 720, an alpha blender 730, and a display unit 740. The determination unit 710 accesses the content server at regular intervals or at times determined by users and determines whether or not content has been updated. If content has been updated, the content receiving unit 720 downloads the updated content and transmits it to the alpha blender 730. The alpha blender 730 alpha-blends the content with the background image and transmits it to the display unit 740.

The above-mentioned content playing method may be written with computer programs. Codes and code segments constituting the programs can be easily deduced by computer programmers skilled in the art. In addition, the programs are stored in computer readable media, read and executed by computers, thereby implementing the text search method. Examples of the computer readable media include magnetic recording media, optical recording media, and carrier wave media.

As apparent from the above description, it is possible to automatically download new content by receiving position information of content, address information of content server, and content ID in SMS message form without interference of users, or checking at regular intervals whether or not content stored in the content server has been updated. Further, since it is possible to blend the downloaded content with a background image and to display the content blended with the background image, it is not necessary to make a reset of the background image.

While the present invention has been described with reference to exemplary embodiments thereof, it will be understood by those skilled in the art that various changes in form and details may be made therein without departing from the scope of the present invention as defined by the following claims.

**Claims**

1.   An apparatus for playing content, comprising:

    a message receiving unit receiving a short message;
    a message interpreting unit extracting position information of multimedia content contained in the short message;
    a content receiving unit accessing a content server through the position information to download the content;
    an alpha blender blending the content with a background image; and
    a display unit receiving and playing the content blended with the background image.

2.   The apparatus of claim 1, wherein the message receiving unit receives and transmits an SMS message or a Common SMS message to the message interpreting unit with no interaction with a user.

3.   The apparatus of claim 1 or 2, wherein the message interpreting unit receives the position information of the multimedia content in Uniform Resource Locator (hereinafter referred to as URL) form and extracts the position information from the short message.

4.   The apparatus of claim 1 or 2, wherein the message interpreting unit extracts from the short message at least one of IP address of a multimedia content server and ID of content to be downloaded.

5.   An apparatus for playing content, comprising:

    a determination unit accessing a content server according to predetermined time intervals or user's setup to determine whether or not content is updated;
    a content receiving unit downloading content when the content is updated;
    an alpha blender blending the content with a background image; and
    a display unit receiving and playing the content blended with the background image.

6.   A method of playing content, comprising:

    receiving position information of multimedia content including animation, news and current stock prices that are produced by content providers and are contained in a short message;
    accessing a server storing the multimedia content through the position information contained in the short message and downloading the multimedia content; and
    displaying the content blended with a background image.

7.   The method of claim 6, wherein the operation of accessing a server extracts the position information of multimedia content contained in the short message in URL form, and accesses the server through the extracted position information to download the multimedia content.

8.   The method of claim 6, wherein the operation of accessing a server receives at least one of IP address of a server and ID of content that are contained in the short message and downloads the content.

9.   A method of playing content, comprising:

    accessing a content server according to predetermined time intervals or user's setup to determine whether or not content is updated;
    downloading content when the content is updated; and
    displaying the content blended with a background image.

10.   A computer-readable media storing a program configured to execute on a computer the method of any one of claims 6 to 8.

FIG.1

CONTENT 130

AGENT 120

BACKGROUND IMAGE 110

FIG.2

TRANSMIT SMS
CONTAINING STORAGE
PATH OF UPLOADED CONTENT(S320)

UPLOAD
CONTENT(S310)

240a

SMS
CENTER

230a

CONTENT
SERVER

TRANSMIT SMS MESSAGE(S330)

USE PATH INFORMATION
CONTAINED IN SMS
TO ACCESS SERVER(S340)

DOWNLOAD
CONTENT(S350)

200a

210a

AGENT

220

DISPLAY
UNIT

ALPHA
BLENDING(S360)

TRANSMIT
BLENDED
DATA(S370)

TERMINAL

7

FIG.3

EP 1 746 813 A1

TRANSMIT SMS MESSAGE(S430)

SMS CENTER
240b

TRANSMIT SMS CONTAINING IP ADDRESS OF CONTENT SERVER OR IP ADDRESS/CONTENT ID(S420)

200b

ALPHA BLENDING (S460)

USE IP ADDRESS AND ID INFORMATION CONTAINED IN SMS TO ACCESS SERVER(S440)

AGENT
210b

CONTENT SERVER
230b

DOWNLOAD CONTENT(S450)

TRANSMIT BLENDED DATA(S470)

UPLOAD CONTENT(S410)

DISPLAY UNIT
220

ID:CONTENT POSITION
01:Path 1
02:Path 2

TERMINAL

FIG.4

UPLOAD CONTENT(S510)

230c

CONTENT SERVER

ACCESS SERVER PERIODICALLY TO CHECK WHETHER CONTENT IS UPDATED(S520)

DOWNLOAD UPDATED CONTENT(S530)

200c

210c

AGENT

ALPHA BLENDING (S540)

TRANSMIT BLENDED DATA(S550)

DISPLAY UNIT

220

TERMINAL

FIG.5A

FIG.5B

FIG.5C

FIG.5D

# FIG.6

SMS/Common SMS

```
┌─────────────────┐    ┌─────────────────┐    ┌─────────────────┐
│    MESSAGE      │──▶ │    MESSAGE      │──▶ │    CONTENT      │──▶
│ RECEIVING UNIT  │    │ INTERPRETING UNIT│    │ RECEIVING UNIT  │
└─────────────────┘    └─────────────────┘    └─────────────────┘
        └610                    └620                    └630
```

```
┌─────────────────┐    ┌─────────────────┐
◀──│  DISPLAY UNIT   │◀──│  ALPHA BLENDER  │◀──┘
│                 │    │                 │
└─────────────────┘    └─────────────────┘
        └650                    └640
```

# FIG.7

```
        ┌─────────────────┐    ┌─────────────────┐
    ──▶ │  DETERMINATION  │──▶ │    CONTENT      │
        │      UNIT       │    │ RECEIVING UNIT  │
        └─────────────────┘    └─────────────────┘
                └710                    └720
                                          │
                                          ▼
        ┌─────────────────┐    ┌─────────────────┐
    ◀── │  DISPLAY UNIT   │◀──│  ALPHA BLENDER  │
        │                 │    │                 │
        └─────────────────┘    └─────────────────┘
                └740                    └730
```

**European Patent Office**

**EUROPEAN SEARCH REPORT**

Application Number

EP 06 01 5164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/052815 A2 (SYMBIAN LTD [GB]; FORSYTH JOHN MATTHEW [GB]) 4 July 2002 (2002-07-04) * page 4, line 1 - page 6, line 21 * * page 7, line 27 - page 10, line 22 * * page 16, line 15 - page 17, line 17 * ----- | 1-10 | INV. H04M1/725 |
| X | US 2004/075701 A1 (NG SCOTT [US]) 22 April 2004 (2004-04-22) * paragraph [0013] - paragraph [0015] * * paragraph [0019] - paragraph [0021] * ----- | 1-10 | |
| X | US 2005/097463 A1 (YU HSIN-HSIEN [TW]) 5 May 2005 (2005-05-05) * paragraph [0007] - paragraph [0009] * * paragraph [0020] - paragraph [0022] * * paragraph [0025] * * paragraph [0032] - paragraph [0043] * * paragraph [0046] * * paragraph [0058] * ----- | 1-10 | |
| E | EP 1 705 881 A (LG ELECTRONICS INC [KR]) 27 September 2006 (2006-09-27) * the whole document * ----- | 1-10 | **TECHNICAL FIELDS SEARCHED (IPC)** H04M |

The present search report has been drawn up for all claims

| Place of search | Date of completion of the search | Examiner |
|---|---|---|
| Berlin | 27 October 2006 | López Pérez, Mariano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

**EP 1 746 813 A1**

## ANNEX TO THE EUROPEAN SEARCH REPORT
## ON EUROPEAN PATENT APPLICATION NO.

EP 06 01 5164

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2006

| Patent document cited in search report | | Publication date | Patent family member(s) | | Publication date |
|---|---|---|---|---|---|
| WO 02052815 | A2 | 04-07-2002 | EP<br>GB<br>US | 1346588 A2<br>2373681 A<br>2004077340 A1 | 24-09-2003<br>25-09-2002<br>22-04-2004 |
| US 2004075701 | A1 | 22-04-2004 | NONE | | |
| US 2005097463 | A1 | 05-05-2005 | TW | 241824 B | 11-10-2005 |
| EP 1705881 | A | 27-09-2006 | CN<br>US | 1838807 A<br>2006234696 A1 | 27-09-2006<br>19-10-2006 |

EPO FORM P0459

For more details about this annex : see Official Journal of the European Patent Office, No. 12/82

14

**EP 1 746 813 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2005066142